# EUROPEAN PATENT APPLICATION

(11) **EP 4 258 486 A1**
(43) Date of publication of application: **11.10.2023**
(21) Application number: 21900115.3
(22) Date of filing: 03.12.2021
(51) Int. Cl.: H01R 12/71, H01R 13/73

(54) **CONNECTOR OF DCDC POWER ADAPTER AND DCDC POWER ADAPTER**

(30) Priority: 04.12.2020 CN 202022884798 U
(71) Applicant: Shanghai Valeo Automotive Electrical Systems Co., Ltd., Shanghai 201201 (CN)
(72) Inventor: LIANG, Cuiping, Shanghai 201201 (CN); BAI, Yufeng, Shanghai 201201 (CN); DONG, Tianyuan, Shanghai 201201 (CN); LI, Jianping, Shanghai 201201 (CN); JIN, Ying, Shanghai 201201 (CN)
(74) Representative: Valeo Powertrain Systems
(86) International application number: PCT/CN2021/135503
(87) International publication number: WO 2022/117091

(57) **Abstract**

The present application relates to the technical field of DCDC power converters, and discloses a connector for a DCDC power converter and a DCDC power converter. The connector is used for connecting external power wire harness and an internal printed circuit board of the DCDC power converter. The connector of the DCDC power converter comprises a first contact and a second contact; the first contact is provided with a first power terminal; a first end of the first power terminal is connected to the external power wire harness; the second contact is provided with a second power terminal; a second end of the first power terminal is fixedly and electrically connected to the second power terminal; and the first power terminal is electrically connected to the printed circuit board by means of the second power terminal. According to the present application, the size of the terminals in the connector of the DCDC power converter is reduced, the mold structure is simplified, the size of the internal terminal of each contact is reduced, and the product design is simple; in addition, the two independent contacts are small in size, and the plastic wrapping area on copper bars is small, such that leakage due to cracking can be prevented.

## Description

### TECHNICAL FIELD

The present application relates to the technical field of DCDC power converters and, more particularly, to a connector of a DCDC power converter and a DCDC power converter.

### BACKGROUND

A DCDC power converter can convert DC voltages to lower or higher DC voltages. A connector of a DCDC power converter is used to provide an interface for a vehicle wire harness. The interface mainly includes five parts: a 48 V terminal, a 12 V terminal, an earthing terminal, a connection stud, and a signal contact.

A prior connector of a DCDC power converter is generally integrally molded by placing terminals in an injection mold. However, the mold structure is complex due to the large size and complex structure of terminals in the connector; the terminals of the connector require large current due to the high power of the DCDC power converter, thus requiring terminals with a large cross-sectional area. Because the thermal expansion coefficient between the terminals and the plastics are different during injection molding, gaps or cracks may easily appear after the cooling of the connector, causing leakage.

Based on this, there is an urgent need for a connector of a DCDC power converter and a DCDC power converter to solve the above-mentioned problem.

### SUMMARY

Based on the above-mentioned description, the purpose of the present invention is to provide a connector of a DCDC power converter and a DCDC power converter, such that the product design is simple and the mold structure is simplified; in addition, the two independent contacts are small in size, and the wrapping area on copper bars is small, such that leakage due to cracking can be prevented.

To achieve the above-mentioned purpose, the present application uses the following technical solution:
On one hand, a connector of a DCDC power converter is provided. The connector is used for connecting an external power wire harness and an internal printed circuit board of the DCDC power converter and comprises:
a first contact, the first contact being provided with a first power terminal, a first end of the first power terminal being connected to the external wire harness;
a second contact, the second contact being provided with a second power terminal, a second end of the first power terminal being fixedly and electrically connected to the second power terminal, and the first power terminal being electrically connected to the printed circuit board by means of the second power terminal.

In one embodiment of the connector of the DCDC power converter, a welded connection is used between the first power terminal and the second power terminal; or
a screw connection is used between the first power terminal and the second power terminal.

In one embodiment of the connector of the DCDC power converter, a differential mode inductor terminal is disposed on the second power terminal, the differential mode inductor terminal being electrically connected to the differential mode inductor on the printed circuit board.

In one embodiment of the connector of the DCDC power converter, the differential mode inductor terminal comprises a plurality of differential mode inductor sub-terminals, the plurality of differential mode inductor sub-terminals being arranged within a circle with a diameter of no more than 17 mm, and the distance between the plurality of differential mode inductor sub-terminals being no less than 3 mm.

In one embodiment of the connector of the DCDC power converter, the second contact further comprises a magnetic ring, mounting positions being disposed on the second contact, the magnetic ring being installed within the mounting positions, and the magnetic ring being arranged around an outer side of the differential mode inductor terminal.

In one embodiment of the connector of the DCDC power converter, an insulating plating is disposed on a surface of the magnetic ring.

In one embodiment of the connector of the DCDC power converter, the mounting positions are mounting ribs, the magnetic ring being bonded to the mounting ribs by dispensing; or
the magnetic ring being snapped into the mounting ribs; or
the number of mounting ribs being at least two, the magnetic ring being installed between the mounting ribs, threaded holes being disposed in the mounting ribs, bolts being connected to the threaded holes by threads such that end faces of the bolts abut against the magnetic ring.

In one embodiment of the connector of the DCDC power converter, a common mode capacitor terminal is disposed on the second power terminal, the common mode capacitor terminal being electrically connected to the common mode capacitor on the printed circuit board.

In one embodiment of the connector of the DCDC power converter, the second contact further comprises a second body, the second power terminal being arranged within the second body, and the second contact being integrally molded.

In one embodiment of the connector of the DCDC power converter, the first contact further comprises a first body, the first power terminal being arranged within the first body, the first contact being integrally molded.

On the other hand, a DCDC power converter is provided. The DCDC power converter comprises a housing and the connector of the DCDC power converter according to any of the above-mentioned solutions, the connector of the DCDC power converter being installed on the housing.

The present application has the following beneficial effects:
The present application discloses a connector of a DCDC power converter. The connector of the DCDC power converter comprises a first contact and a second contact; the first contact is provided with a first power terminal; a first end of the first power terminal is connected to an external wire harness; the second contact is provided with a second power terminal; a second end of the first power terminal is electrically connected to the printed circuit board by means of the second power terminal. In the present application, the connector of the DCDC power converter is a split structure, the size of the terminals in the connector of the DCDC power converter is reduced, the mold structure is simplified, the size of the internal terminal of each contact of the first contact and the second contact is reduced compared with connectors of DCDC power converters of the prior art, and the product design is simple; in addition, the two independent contacts are small in size, and the plastic wrapping area on copper bars is small, such that leakage due to cracking can be prevented.

### BRIEF DESCRIPTION OF THE DRAWINGS

To clearly describe the technical solution in the embodiments of the present application, drawings to be used in the description of the embodiments of the present application will be introduced below. Obviously, the drawings in the following description are only some embodiments of the present application. Those of ordinary skill in the art can obtain other drawings according to the contents of the embodiments of the present application and these drawings without creative work.
Fig. 1 is a structural schematic diagram of a DCDC power converter provided according to an embodiment of the present application.
Fig. 2 is a partial structural schematic diagram of a DCDC power converter provided according to an embodiment of the present application.
Fig. 3 is a structural schematic diagram of a connector of a DCDC power converter provided according to an embodiment of the present application.
Fig. 4 is a structural exploded view of a DCDC power converter provided according to an embodiment of the present application.

The reference numerals used in the figures are as follows:
1. printed circuit board; 2. connector; 21. first contact; 211. first power terminal; 2111. connection stud; 212. signal terminal; 213. first body; 22. second contact; 221. second power terminal; 2211. differential mode inductor terminal; 2212.common mode capacitor terminal; 222. second body; 2221. semicircular rib; 23. magnetic ring; 3. housing.

### DETAILED DESCRIPTION

The present application will be further described in detail by referring to the accompanying drawings and embodiments. It should be understood that the specific embodiments described here are intended only to explain the present application rather than to restrict it. It is also important to note that for the convenience of description, the accompanying drawings show only the part related to the present application instead of the entire structure.

In the description of the present application, unless otherwise expressly specified and defined, terms such as "coupled", "connected", and "fixedly" should be understood in a broad sense, for example, fixedly connected, detachably connected or integrally connected; or mechanically connected or electrically connected; or coupled directly or through an intermediate; or two elements communicating internally or interacting. Those of ordinary skill in the art may understand the specific meanings of the above-mentioned terms in the present application as the case may be.

In the present application, unless otherwise specified and defined, a first feature being "above" or "below" a second feature includes the conditions that the first feature and the second features are in direct contact, or the first feature and the second feature are contacted through another feature between them instead of direct contact. In addition, the first feature being "above", "over" and "on" the second feature involves the conditions that the first feature is directly above and obliquely above the second feature, or merely indicates that the first feature is higher than the second feature in height. The first feature being "below", "under" and "beneath" the second feature includes the conditions that the first feature is directly below and obliquely below the second feature, or merely indicates that the first feature is lower than the second feature in height.

The directions or location relations indicated by "upper", "lower", "left", "right", and other terms in the description of this embodiment are based on directions or location relationships shown in the figures, only for the convenience of the description and simplification of operations, not for any indication or implication that any indicated device or element must have a specific direction and be constructed and operated in a specific direction, and thus should not be interpreted as any limitation on the present application. In addition, terms "first" and "second" are only used for distinguishing for the description purpose and have no special meaning.

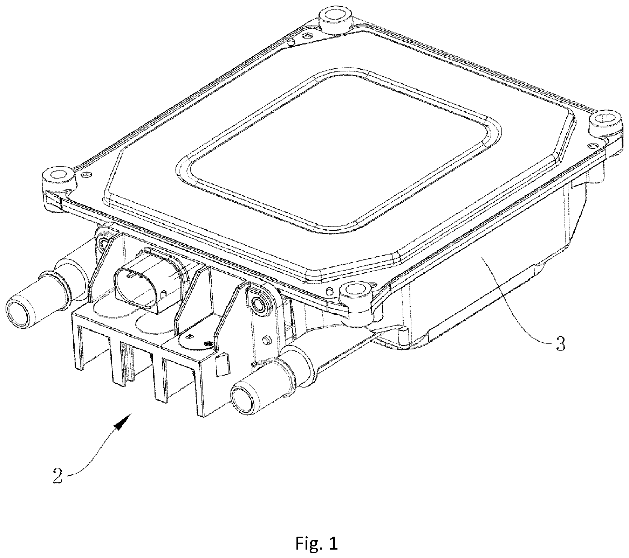

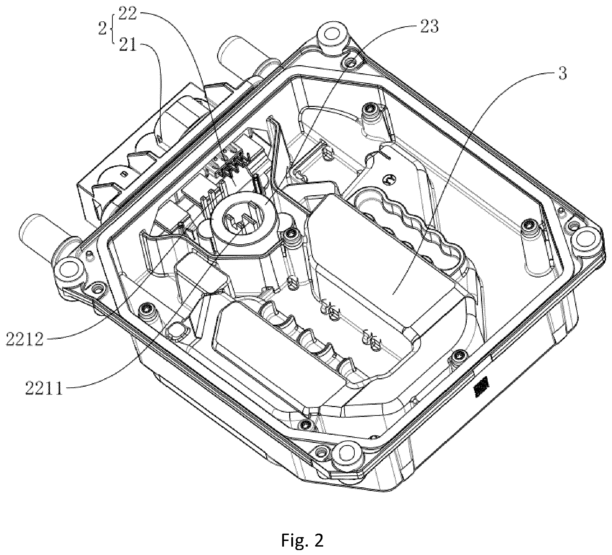

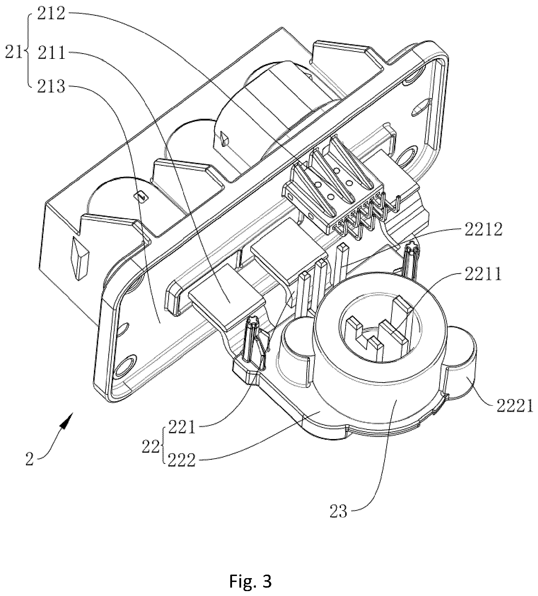

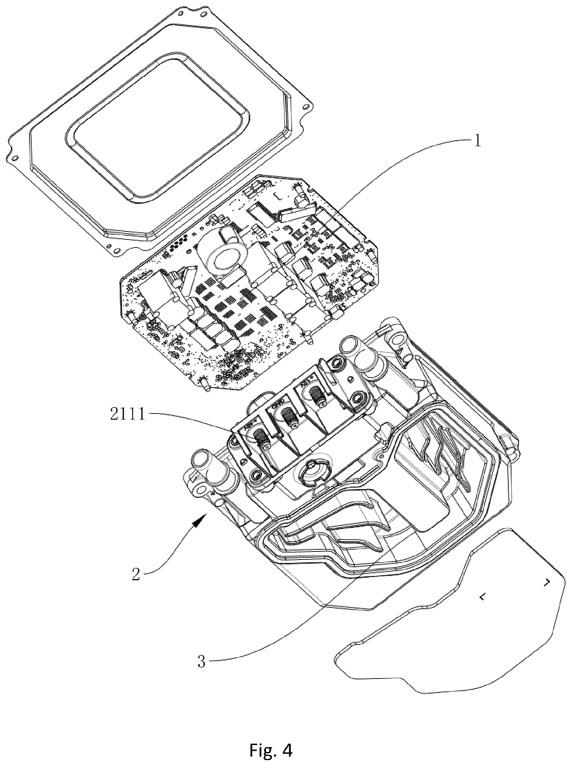

As shown in Figs. 1 through 4, this embodiment provides a DCDC power converter comprising a connector 2 of the DCDC power converter and a housing 3. The connector 2 of the DCDC power converter is installed to the housing 3. The connector 2 of the DCDC power converter comprises a first contact 21 and a second contact 22.

Specifically, the connector 2 is used for connecting an external power wire harness and an internal printed circuit board of the DCDC power converter. The connector 2 of the DCDC power converter comprises a first contact 21 and a second contact 22, the first contact 21 is provided with a first power terminal 211, a first end of the first power terminal 211 is provided with a connection stud 2111, and the first end of the first power terminal 211 is connected to the external wire harness by means of the connection stud 2111. Preferably, the first contact 21 further comprises a signal terminal 212 in this embodiment, one end of the signal terminal 212 is connected to an external signal wire harness, and the other end is connected to the printed circuit board 1 to transfer signals. A second contact 22 is arranged below the printed circuit board 1, the second contact 22 is provided with a second power terminal 221, a second end of the first power terminal 211 is fixedly and electrically connected to the second power terminal 221, and the first power terminal 211 is electrically connected to the printed circuit board 1 by means of the second power terminal 221 to connect circuits. In this embodiment, the connector 2 of the DCDC power converter is a separate structure, the size of the terminals in the connector 2 of the DCDC power converter is reduced, the mold structure is simplified, the size of the internal terminal of each contact of the first contact 21 and the second contact 22 is reduced compared with connectors of DCDC power converters of the prior art, and the product design is simple; in addition, the two independent contacts are small in size, and the plastic wrapping area on copper bars is small, such that leakage due to cracking can be prevented.

Preferably, a welded connection is used between the first power terminal 211 and the second power terminal 221 in this embodiment, wherein the welding method is a brazed connection. In other embodiments, a screw connection is used between the first power terminal 211 and the second power terminal 221. The above-mentioned methods achieve both fixed connection and electrical connection between the two terminals.

In this embodiment, the first contact 21 comprises a first body 213, the first power terminal 211 and the signal terminal 212 are arranged in the first body 213, the first body 213 is plastic, and the first body 213, the first power terminal 211, and the signal terminal 212 are integrally molded by injection molding. The second contact 22 comprises a second body 222, the second power terminal 221 is arranged in the second body 222, the second body 222 is plastic, and the second body 222 and the second power terminal 221 are integrally molded by injection molding.

In the prior art, the structure of the terminals in the connector of the DCDC power converter is complex. Due to the problem of the injection mold making process, terminals cannot be easily made into a compact structure and cannot be connected to a differential mode inductor to reduce electromagnetic interference from the connector of the DCDC power converter to external devices. In this embodiment, the structure of the terminal in the second contact 22 is simple, so a differential mode inductor terminal 2211 can be disposed on the second power terminal 221. The differential mode inductor terminal 2211 is electrically connected to the differential mode inductor on the printed circuit board 1 to reduce electromagnetic interference with external devices from the connector 2 of the DCDC power converter.

Preferably, the second contact 22 further comprises a magnetic ring 23, mounting positions are disposed on the second body 222 of the second contact 22, the magnetic ring 23 is installed within the mounting positions, and the magnetic ring 23 is arranged around an outer side of the differential mode inductor terminal 2211. The arrangement of the magnetic ring 23 can inhibit the inward or outward transmission of electromagnetic radiation, improving electromagnetic compatibility. Further preferably, the mounting positions are mounting ribs. It is important to note that the magnetic ring 23 is an EMC magnetic ring in this embodiment.

Preferably, the mounting ribs are two or more oppositely arranged semicircular ribs 2221 and the magnetic ring 23 is bonded between the two or more semicircular ribs 2221 by applying glue in this embodiment. In other embodiments, the magnetic ring 23 is snapped into the mounting ribs; or the magnetic ring 23 is installed between the mounting ribs, threaded holes are disposed in the mounting ribs, and bolts are connected to the threaded holes by threads such that end faces of the bolts abut against the magnetic ring 23.

In this embodiment, the differential mode inductor terminal 2211 comprises a plurality of differential mode inductor sub-terminals, and the plurality of differential mode inductor sub-terminals are arranged within a circle with a diameter of no more than 17 mm; the distance between the plurality of differential mode inductor sub-terminals is no less than 3 mm, which meets the hazardous thermal event (HTE) requirements and prevents internal short circuit between the differential mode inductor sub-terminals. In this embodiment, the number of the plurality of differential mode inductor sub-terminals is three, including a 12 V differential mode inductor terminal, a 48 V differential mode inductor terminal, and an earthing differential mode inductor terminal, the distance between the 48 V differential mode inductor terminal and the earthing differential mode inductor terminal is 5 mm, and the distance between the earthing differential mode inductor terminal and the 12 V differential mode inductor terminal is 3.3 mm. In this embodiment, the inner diameter of the magnetic ring 23 is 18.75 mm and the outer diameter of the magnetic ring 23 is 38 mm. Further preferably, an insulating plating is disposed on an outer surface of the magnetic ring 23, and the insulating plating is high polymer material (gum, rubber, or animal glue), epoxy resin, etc., to avoid a short circuit after the rupture of the magnetic ring 23.

Furthermore, a common mode capacitor terminal 2212 is disposed on the second power terminal 221, and the common mode capacitor terminal 2212 is electrically connected to the common mode capacitor on the printed circuit board 1 so that the connecting circuit is the shortest.

It is important to particularly note that, in this embodiment, the first power terminal 211 and the second power terminal 221 include three corresponding terminals each, and the three terminals respectively are a 12 V terminal, an earthing terminal, and a 48 V terminal. The terminal surface receives a plating treatment to meet the welding requirements, and the plating is one of or any combination of at least two of tin, zinc, silver, and nickel. A connection stud 2111 for connecting an external power wire harness is disposed at the first end of each first power terminal 211. A differential mode inductor terminal 2211 and a common mode capacitor terminal 2212 are disposed on each second power terminal 221. The cross-sectional area of the second power terminal 221 is designed to be 21 mm² to satisfy the peak current of 210 A.

It is important to note that the above are only some preferred embodiments and applications of the technical principle of the present application. It should be understood by those skilled in the art that the present application is not limited to specific embodiments described here. Those skilled in the art can make various obvious changes, readjustments, and replacements without departing from the protection scope of the present application. Therefore, the present application is described in detail using the above-mentioned embodiments, but is not limited to the above-mentioned embodiments. Additional equivalent embodiments are possible without departing from the ideas of the present application. The scope of the present application is determined by the appended claims.

## Claims

1. A connector of a DCDC power converter, the connector being used for connecting an external power wire harness and an internal printed circuit board (1) of the DCDC power converter, **characterized in that** the connector of the DCDC power converter comprises:
a first contact (21), the first contact being provided with a first power terminal (211), and a first end of the first power terminal (211) being connected to the external power wire harness;
a second contact (22), the second contact being provided with a second power terminal (221), a second end of the first power terminal (211) being fixedly and electrically connected to the second power terminal (221), and the first power terminal (211) being electrically connected to the printed circuit board (1) by means of the second power terminal (221).

2. The connector of the DCDC power converter according to Claim 1, **characterized in that** a welded connection is used between the first power terminal (211) and the second power terminal (221); or
a screw connection is used between the first power terminal (211) and the second power terminal (221).

3. The connector of the DCDC power converter according to Claim 1, **characterized in that** a differential mode inductor terminal (2211) is disposed on the second power terminal (221), and the differential mode inductor terminal (2211) is electrically connected to the differential mode inductor on the printed circuit board (1).

4. The connector of the DCDC power converter according to Claim 3, **characterized in that** the differential mode inductor terminal (2211) comprises a plurality of differential mode inductor sub-terminals, and the plurality of differential mode inductor sub-terminals are arranged within a circle with a diameter of no more than 17 mm, and the distance between the plurality of differential mode inductor sub-terminals is no less than 3 mm.

5. The connector of the DCDC power converter according to Claim 3, **characterized in that** the second contact (22) further comprises a magnetic ring (23), and mounting positions are disposed on the second contact (22), and the magnetic ring (23) is installed within the mounting positions, and the magnetic ring (23) is arranged around an outer side of the differential mode inductor terminal (2211).

6. The connector of the DCDC power converter according to Claim 5, **characterized in that** an insulating plating is disposed on a surface of the magnetic ring (23).

7. The connector of the DCDC power converter according to Claim 5, **characterized in that** the mounting positions are mounting ribs, and the magnetic ring (23) is bonded to the mounting ribs by glue dispensing; or
the magnetic ring (23) is snapped into the mounting ribs; or
the number of mounting ribs is at least two, and the magnetic ring (23) is installed between the mounting ribs, and threaded holes are disposed in the mounting ribs, and bolts are connected to the threaded holes by threads such that end faces of the bolts abut against the magnetic ring (23).

8. The connector of the DCDC power converter according to Claim 1, **characterized in that** a common mode capacitor terminal (2212) is disposed on the second power terminal (221), and the common mode capacitor terminal (2212) is electrically connected to the common mode capacitor on the printed circuit board (1).

9. The connector of the DCDC power converter according to Claim 1, **characterized in that** the second contact (22) further comprises a second body (222), and the second power terminal (221) is arranged within the second body (222), and the second contact (22) being integrally molded.

10. The connector of the DCDC power converter according to Claim 1, **characterized in that** the first contact (21) further comprises a first body (213), and the first power terminal (211) is arranged within the first body (213), and the first contact (21) is integrally molded.

11. A connector of a DCDC power converter, the connector being used for connecting an external power wire harness and internal printed circuit board (1) of the DCDC power converter, **characterized in that** the connector of the DCDC power converter comprises:
a first contact (21), the first contact being provided with a first power terminal (211), and a first end of the first power terminal (211) being connected to the external power wire harness;
a second contact (22), the second contact being provided with a second power terminal (221), a second end of the first power terminal (211) being fixedly and electrically connected to the second power terminal (221), and the first power terminal (211) being electrically connected to the printed circuit board (1) by means of the second power terminal (221);
wherein the first contact (21) further comprises a signal terminal (212), and one end of the signal terminal (212) is connected to an external signal wire harness, and the other end being connected to the printed circuit board (1).

12. A DCDC power converter, **characterized in that** the DCDC power converter comprises a housing (3) and the connector of the DCDC power converter according to any one of Claims 1 to 11, and the connector of the DCDC power converter is installed to the housing (3).
